(19) Europäisches Patentamt
European Patent Office
Office européen des brevets

(11) **EP 2 343 797 B1**

(12) **EUROPÄISCHE PATENTSCHRIFT**

(45) Veröffentlichungstag und Bekanntmachung des Hinweises auf die Patenterteilung:
**25.03.2020  Patentblatt 2020/13**

(51) Int Cl.:
*H02P 6/15* *(2016.01)*       *H02P 1/46* *(2006.01)*
*H02P 6/18* *(2016.01)*       *H02P 6/20* *(2016.01)*

(21) Anmeldenummer: **10016125.6**

(22) Anmeldetag: **28.12.2010**

(54) **Einphasiger elektronisch kommutierter Motor**

Single phase electronically commuted motor

Moteur monophasé commuté de manière électronique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2010  DE 102010004362**

(43) Veröffentlichungstag der Anmeldung:
**13.07.2011  Patentblatt 2011/28**

(73) Patentinhaber: **Ebm-Papst St. Georgen GmbH & CO. KG**
**78112 St. Georgen (DE)**

(72) Erfinder:
• **Weissbach, Henry**
**79777 Uhlingen-Birkendorf**
**OT Brenden (DE)**
• **Löffler,Jens**
**78050 Villingen-Schwenningen (DE)**

(74) Vertreter: **Staeger & Sperling**
**Partnerschaftsgesellschaft mbB**
**Sonnenstraße 19**
**80331 München (DE)**

(56) Entgegenhaltungen:
**WO-A1-2007/140927     WO-A1-2008/148401**

**Beschreibung**

Einphasige elektronisch kommutierte Motoren (ECM) sind sehr preiswert und werden häufig für bestimmte Antriebsaufgaben verwendet, z. B. für Lüfter oder Kreiselpumpen. Gewöhnlich werden sie mittels eines Hallsensors gesteuert. Angestrebt wird jedoch eine Kommutierung ohne Sensor, bekannt unter dem Stichwort "sensorlos" oder "sensorless", da sich hierdurch ein besserer Wirkungsgrad ergibt.

Die Terminologie bei solchen Motoren ist etwas verwirrend. Zur genauen Definition eines ECM gibt man zum einen die Zahl der Statorstromimpulse pro Rotordrehung von 360 °el an, z. B. einpulsig, zweipulsig, dreipulsig etc., und zum anderen gibt man die Zahl der Wicklungsstränge im Stator an, z. B. einsträngig, zweisträngig, dreisträngig etc.

Man spricht also z. B. von einem einsträngigen, zweipulsigen ECM oder von einen zweisträngigen, zweipulsigen ECM. Statt des Ausdrucks ECM verwendet man auch den Ausdruck "kollektorloser Motor". Da in der physikalischen Wirkungsweise zwischen den einsträngigen und den zweisträngigen Motoren kein Unterschied besteht, und da die Praxis stets nach Vereinfachung der Terminologie strebt, bezeichnet man solche Motoren generell als "einphasige ECMs", obwohl sie entweder nur einen Strang, oder aber zwei Stränge, haben können.

Da bei solchen Motoren der Rotor Drehstellungen hat, an denen der Motor kein elektromagnetisches Drehmoment erzeugen kann, verwendet man ein Hilfsmoment, das an diesen Nullstellen wirksam ist. Das kann ein magnetisch erzeugtes Hilfsmoment sein, das man als Reluktanzmoment bezeichnet. Alternativ könnte dieses Hilfsmoment mechanisch erzeugt werden, z. B. durch eine Feder, die in bestimmten Drehstellungen gespannt wird und an den Nullstellen ihre gespeicherte Energie abgibt. Dadurch wird der Rotor im Stillstand so weit gedreht, dass er sich beim Start nicht in einer Drehstellung befindet, in der der Motor kein elektromagnetisches Drehmoment erzeugen kann, da sonst der Motor nicht starten könnte. Diese Startstellung wird auch als Raststellung bezeichnet.

Bei solchen Motoren ist - bei stromlosem Motor - im Normalfall der Rotor im Stillstand und befindet sich in einer sog. Raststellung (cogging position), in die er durch das genannte Hilfsmoment gezogen wird. Wenn man den Motor in dieser Rotorstellung bestromt, wird sich der Rotor bewegen, aber man kann nur vermuten, wie stark er sich bewegen wird.

Die WO 2008/148401 A1 zeigt ein Verfahren zum Betrieb eines einsträngigen elektronisch kommutierten Motors an einer Gleichspannungsquelle. Ein Stator hat einen Strang, der durch eine H-Brücke ansteuerbar ist. Zwischen den oberen und unteren Halbleiterschaltern ist jeweils ein Abgriff vorgesehen, um zu bestimmen, ob ein Kreisstrom fließt. Dies ermöglicht eine leistungslose Kommutierung.

Die WO 2007/140927 A1 zeigt einen elektronisch kommutierten Motor mit zwei Strängen, die jeweils über einen in Serie geschalteten Halbleiterschalter bestrombar sind. Ein dritter Halbleiterschalter ist im Gleichstromzwischenkreis vorgesehen. Zur Einleitung eines Kommutierungsvorgangs wird der dritte Halbleiterschalter gesperrt, so dass ein Kreisstrom fließt. Der Kreisstrom wird überwacht, wobei hierzu jeweils ein Abgriff zwischen dem Strang und dem zugehörigen Halbleiterschalter vorgesehen ist. Sobald der Kreisstrom einen vorgegebenen Wert unterschreitet, wird auch der bisher leitende Halbleiterschalter nicht-leitend geschaltet. Anschließend wird der andere Strang bestromt.

Es ist deshalb eine Aufgabe der Erfindung, einen neuen ECM bereit zu stellen.

Nach der Erfindung wird diese Aufgabe gelöst durch den Gegenstand des Patentanspruchs 1. Durch die Erfassung der Betriebsspannung erhält man die Möglichkeit, die Energiezufuhr beim Start richtig zu dosieren. Die Energie wird nämlich beim Start als sog. Bestromungsblock zugeführt, und dieser Block kann durch die Erfindung so dosiert werden, dass unabhängig von der augenblicklichen Betriebsspannung beim Start etwa dieselbe Energiemenge zugeführt wird. Anschießend hieran wird geprüft, ob diese Energiemenge zu klein oder zu groß ist, und es werden ggf. entsprechende Korrekturmaßnahmen getroffen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 ein Übersichtsbild, welches schematisch verschiedene Situationen zeigt, die beim Betrieb eines sensorlosen einphasigen Motors auftreten können und die deshalb in seiner Software berücksichtigt werden müssen, um einen sicheren Anlauf zu gewährleisten,

Fig. 2 eine schematische Darstellung zur Erläuterung eines ECM, der mit einem Reluktanzmoment arbeitet,

Fig. 3 ein Schaltbild einer Ausführungsform eines einphasigen Motors, der zur Berücksichtigung von Situationen der Fig. 1 ausgebildet ist; der Motor ist als zweisträngiger Motor dargestellt,

Fig. 4 eine Darstellung zur Erläuterung der Fig. 3, und

Fig. 5 eine Routine zur Optimierung einer Zeitdauer Tv, deren zeitliche Länge für eine optimale Kommutierung wichtig ist.

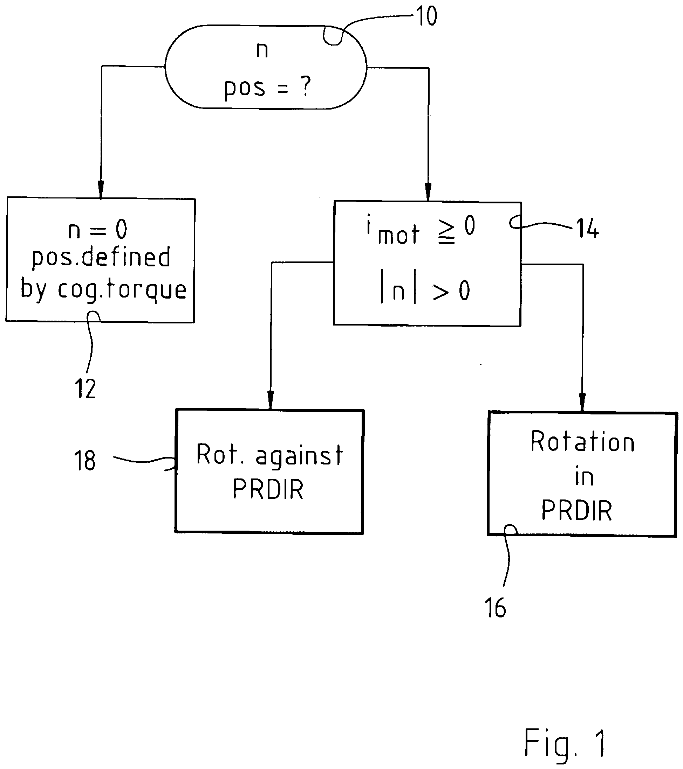

**Fig. 1** zeigt schematisch Probleme, die bei der Entwicklung eines "sensorlosen einphasigen ECM" berücksichtigt werden müssen.

Nach dem Einschalten befindet sich der Motor in der Situation 10 der Fig. 1, d.h. er hat entweder die Drehzahl n = 0, oder (bei Fremdantrieb) eine Drehzahl n ≠ 0, und seine Drehstellung "pos" ist - für die Elektronik des Motors - unbekannt, da kein Rotorstellungssensor vorhanden ist.

Gemäß der Situation 12 kann das bedeuten, dass die Drehzahl Null ist und dass sich der Rotor in einer seiner Raststellungen befindet, die durch das Rastmoment (cogging torque) definiert ist.

Der Motor kann sich aber auch in der Situation 14 befinden, d.h. dass ein Fremdantrieb auf ihn einwirkt. Z.B. kann bei einem Lüfter ein Windstoß oder ein Sturm den Motor antreiben, so dass er zwar keinen oder nur einen niedrigen Motorstrom erhält, aber seine Drehzahl n ≠ 0

ist, weil der Rotor bei einem Lüfter wie eine Windmühle von einem Sturm angetrieben werden kann.

Der Motor kann aber auch unter diesen Bedingungen in beiden Drehrichtungen laufen, vgl. die Stellungen 16 und 18 der Fig. 1, wobei der normale Motorstrom fließt. Sollte sich der Motor in die falsche Drehrichtung drehen, so werden entsprechende Gegenmaßnahmen nötig. Eine falsche Drehrichtung bedeutet also, dass nach dem Start reversiert werden muss.

Im Schritt 14 wird gemessen, ob eine induzierte Spannung $u_{ind}$ vorhanden ist, also ob der Betrag von $u_{ind}$ größer als 0 ist. Dies kann z.B. auch der Fall sein, wenn ein Lüfter durch Wind passiv angetrieben wird. Außerdem wird gemessen, ob der Betrag von n größer als 0 ist.

Falls die beiden Antworten Nein lauten, geht das Programm zum Schritt 12, wo angezeigt wird, dass die Drehzahl den Wert 0 hat, und dass die Drehstellung des Rotors durch das sogenannte Rastmoment (cogging torque) definiert ist, d.h. der Rotor ist in einer seiner Raststellungen eingerastet.

Falls im Schritt 14 die Antworten Ja sind, dreht sich der Rotor entweder in seiner Vorzugsrichtung PRDIR (Schritt 16), oder aber er dreht sich entgegen seiner Vorzugsrichtung PRDIR (Schritt 18). Man kann aber den vorhandenen Daten die Drehrichtung nicht ohne weiteres entnehmen.

Der Motor kann sich aber auch durch äußere Einflüsse in jeder der beide Drehrichtungen drehen, wobei der normale Motorstrom fließt, aber sich der Motor in der falschen Richtung drehen kann. Eine falsche Drehrichtung bedeutet, dass diese nach dem Start reversiert werden muss.

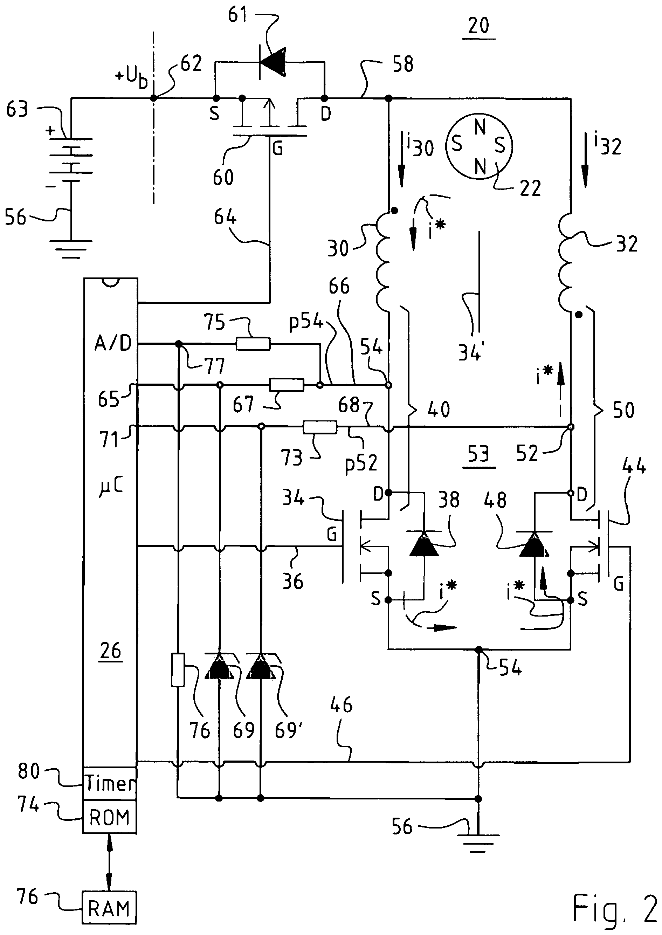

**Fig. 2** zeigt die Schaltung eines ECM 20, der sensorlos arbeitet. Der Motor 20 hat einen (nur schematisch angedeuteten) permanentmagnetischen Rotor 22, der vierpolig dargestellt ist, aber auch zwei, sechs, acht etc. Pole haben kann. Der Rotor 22 kann ein Innenrotor, Außenrotor, der Rotor eines Motors mit ebenem oder konischem Luftspalt etc. sein.

Der Motor 20 hat eine elektronische Recheneinrichtung 26, insbesondere einen Mikrocontroller μC 26, Z.B. vom Typ PIC12F629 der Firma Microchip Technology, Inc., USA. Die Stromversorgung des μC26 ist wie üblich nicht dargestellt. Der Motor 20 hat zwei Statorwicklungsstränge 30, 32, die gewöhnlich über den magnetischen Kreis des Motors magnetisch gekoppelt sind, wie durch das Symbol 34' angedeutet. In Reihe mit dem ersten Wicklungsstrang 30 liegt ein erster Halbleiterschalter, hier z. B. ein n-Kanal MOSFET 34, zu dem eine Freilaufdiode 38 antiparallel geschaltet ist, und der von dem μC 26 über eine Steuerleitung 36 gesteuert wird. Der Strang 30 bildet zusammen mit dem Halbleiterschalter 34 und der Diode 38 eine erste Serienschaltung 40, die ggf. weitere Elemente enthalten kann.

In Reihe mit dem zweiten Strang 32 liegt ein zweiter steuerbarer Halbleiterschalter 44, der vom μC 26 über eine Steuerleitung 46 gesteuert wird. Das kann ebenfalls ein n-Kanal MOSFET 44 sein, zu dem eine Freilaufdiode 48 antiparallel geschaltet ist. Zusammen mit dem zweiten Halbleiterschalter 44 bildet der zweite Strang 32 eine zweite Serienschaltung 50, die weitere Elemente enthalten kann.

Wie Fig. 2 zeigt, sind die beiden Serienschaltungen 40, 50 zu einer Parallelschaltung 53 parallel geschaltet, deren Fußpunkt 54 mit Masse 56 verbunden ist. Auch sind die oberen Enden der Stränge 30, 32 mit einem Gleichstrom-Zwischenkreis (dc link) 58 verbunden. Wenn also der Halbleiterschalter 34 leitet, fließt ein Strom $i_{30}$ vom Zwischenkreis 58 durch den ersten Strang 30, und wenn der Halbleiterschalter 44 leitet, fließt ein Strom $i_{32}$ durch den Strang 32. Diese Aussage muss aber für die Zeitabschnitte kurz vor einer Kommutierung modifiziert werden, was nachfolgend erläutert wird.

Der Zwischenkreis 58 ist über einen dritten Halbleiterschalter 60, hier einen p-Kanal MOSFET, mit einem Motoranschluss 62 verbunden, an den im Betrieb eine positive Spannung Ub angelegt wird, z. B. 12, 24, 48, 60 V etc. gegen Masse 56. Eine Gleichstromquelle 63 beliebiger Art ist symbolisch dargestellt. Als Gleichstromquelle dient z.B. oft ein Netzgerät.

Antiparallel zum dritten Halbleiterschalter 60 kann eine Diode 61 vorgesehen sein. Der dritte Halbleiterschalter 60 wird über eine Steuerleitung 64 vom μC 26 gesteuert.

Einem Komparatoreingang 65 des μC 26 wird über eine Sensorleitung 66 und einen Widerstand 67 ein Potential vom Drain D des Halbleiterschalters 34 zugeführt. Der Eingang 65 ist über eine Zenerdiode 69 mit Masse 56 verbunden, um diesen Eingang gegen Überspannung zu schützen.

Ebenso wird einem Komparatoreingang 71 des μC 26 über eine Sensorleitung 68 und einen Widerstand 73 ein Potenzial vom Drain D des zweiten Halbleiterschalters 44 zugeführt. Der Eingang 71 ist über eine Zenerdiode 69' mit Masse 56 verbunden, um ihn gegen Überspannung zu schützen.

Ferner ist zwischen dem Drain D des ersten Halbleiterschalters 34 und Masse ein Spannungsteiler aus zwei Widerständen 75, 76 angeschlossen, deren Verbindungspunkt 77 mit dem Eingang A/D eines A/D-

Wandlers im $\mu$C 26 verbunden ist.

## Messung von Ub

Diese Messung erfolgt über den Spannungsteiler 75, 76. Dieser ist so dimensioniert, dass die interne Referenzspannung (hier 5 V) des A/D-Wandlers im $\mu$C 26 nicht überschritten werden kann. Dadurch werden Messfehler ausgeschlossen. Dieser Spannungsteiler kann alternativ auch zwischen der Source S des dritten Halbleiterschalters 60 und Masse 56 angeschlossen werden.

Der Spannungsteiler 75, 76 hat auch noch zusätzlich eine andere Funktion: Je nach der Amplitude der Spannungen, die in den Strängen 30, 32 induziert werden, werden diese Spannungen durch die Schutzdioden 69, 69' begrenzt. Für die Drehrichtungserkennung ist es aber wichtig, die Form der induzierten Spannungen an den Eingängen 65 bzw. 71 zu erfassen, was durch eine Spannungsbegrenzung verhindert würde. Deshalb wird in diesem Fall die induzierte Spannung über den Spannungsteiler 75, 76 und den Eingang A/D des $\mu$C 27 erfasst, wodurch auch die Form der induzierten Spannung erfasst werden kann.

Die Signale an den Drains D des ersten Halbleiterschalters 34 und des zweiten Halbleiterschalters 44 werden an den Komparatoren 65, 71 im $\mu$C 26 erfasst.

## Wirkungsweise von Fig. 2

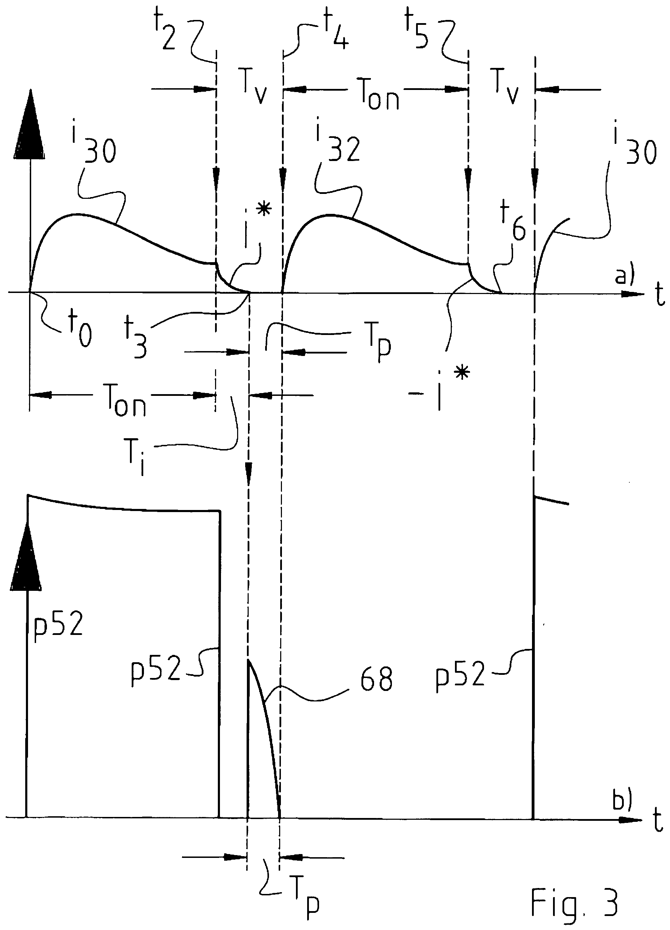

Hierzu wird auf Fig. 3 Bezug genommen.

Kurz vor dem Zeitpunkt $t_0$ der Fig. 3 sind in Fig. 2 alle drei Halbleiterschalter 34, 44, 60 gesperrt, und folglich erhält der Motor 20 keine Energie vom Anschluss 62, d. h. die Energiezufuhr aus der Gleichstromquelle 63 ist gesperrt.

Zum Zeitpunkt $t_0$ werden die Transistoren 34, 60 durch den $\mu$C 26 eingeschaltet, so dass vom Anschluss 62 ein Strom $i_{30}$ über den Transistor 60, den Zwischenkreis 58, den Strang 30 und den Transistor 34 nach Masse 56 fließt. Fig. 3a) zeigt die Form des Stromes $i_{30}$, die naturgemäß von der Höhe der Motordrehzahl und anderen Faktoren abhängt.

Auf den Kommutierungszeitpunkt $t_0$ folgt ein Kommutierungszeitpunkt $t_4$, an dem der Transistor 34 ausgeschaltet ist und der Transistor 44 eingeschaltet wird, so dass der Strom $i_{30}$ abgeschaltet und der Strom i32 (durch den Strang 32) eingeschaltet wird.

In einem zeitlichen Abstand Tv vor $t_4$ liegt ein Zeitpunkt $t_2$, an dem der Transistor 60 gesperrt wird, so dass die Energiezufuhr vom Anschluss 62 unterbrochen wird, d. h. dem Motor 20 wird während des Zeitraums Tv keine Energie aus der Gleichstromquelle 63 zugeführt.

Im Strang 30 fließt kurz vor dem Zeitpunkt $t_2$ ein bestimmter Strom i, so dass im Strang 30 eine bestimmte Energie E gespeichert ist, gemäß der Formel

$$E = 0,5 * L * i^2 \ldots (1)$$

Hierbei ist
E = im Magnetfeld des betreffenden Stranges gespeicherte Energie
L = Induktivität dieses Strangs
i = Strom zum Zeitpunkt $t_2$.

Diese gespeicherte Energie bewirkt, dass jetzt ein Kreisstrom i* durch den Strang 30 fließt, da der Transistor 34 weiter leitend ist, Dieser Kreisstrom i* fließt vom unteren Anschluss des Strangs 30 über den Transistor 34, den Knotenpunkt 54, die Freilaufdiode 48 und die beiden Stränge 32 und 30, so dass er wie bisher ein antreibendes Drehmoment auf den Rotor 22 erzeugt, wodurch der Kreisstrom i* rasch sinkt und zum Zeitpunkt t3 der Fig. 3a) den Wert Null erreicht. Ab dem Zeitpunkt $t_3$ kann also der Transistor 34 leistungslos gesperrt werden, da der Kreisstrom i* zu Null geworden ist.

## Die Messung der Betriebsspannung Ub

Für den Anlauf ist es wichtig, die Betriebsspannung Ub des Motors zu kennen. Die meisten ECM haben zwar eine feste Betriebsspannung, können aber auch in einem erweiterten Betriebsspannungsbereich betrieben werden. So sollen z. B. ECM für eine Spannung von 48 V in einem Spannungsbereich betrieben werden können, der etwa von 36 V bis etwa 72 V geht. Durch diese Spannungsunterschiede ergeben sich - bei gleicher Bestromungsdauer - für die ersten Bestromungsblöcke sehr unterschiedliche Rotorbeschleunigungen: Bei höheren Betriebsspannungen wird der Rotor stärker beschleunigt, und es kann sein, dass deshalb der Wechsel der induzierten Spannung nicht erkannt wird, so dass keine Kommutierung stattfinden kann. Um das Erkennen der induzierten Spannung nach dem ersten Bestromungsblock sicher zu stellen, müssen die ersten Bestromungsblöcke im Verhältnis zur Betriebsspannung angepasst werden. Wenn der Motor steht, kann die Betriebsspannung sehr einfach über den Spannungsteiler 75, 76 und den A/D-Wandler im Mikrocontroller 26 ermittelt werden. Dies kann man so ausführen, dass man den Halbleiterschalter 60 einschaltet und die beiden Endstufentransistoren 34 und 44 ausschaltet. In diesem Fall wird die Betriebsspannung direkt am Drainanschluss D des Endstufentransistors 34 gemessen.

Sofern der Motor zusätzlich von außen angetrieben wird, was man als Fremdantrieb bezeichnet, tritt an den Messpunkten der Wicklung zusätzlich eine induzierte Spannung auf. Diese überlagert sich der Betriebsspannung, weshalb letztere nicht sicher erkannt werden kann. Man kann in diesem Fall die Betriebsspannung an einer Stelle vor dem Transistor 60 messen. Diese Variante benötigt allerdings zusätzlichen Schaltungsaufwand. Als Ausweg kann man so vorgehen, dass bei Feststellung eines Fremdantriebs die induzierte Spannung und deren Nulldurchgänge beobachtet werden. Dies ist möglich, indem man alle drei Halbleiterschalter nichtleitend lässt. Dadurch liegt keine Betriebsspannung an den Wicklungssträngen 30, 32, und man kann den Verlauf der induzierten Spannung beobachten. Kommt es nun zu einem Nulldurchgang der induzierten Spannung, so wird der Transistor 60 eingeschaltet, und die Betriebsspannung liegt dann an den Wicklungssträngen. In diesem Augenblick hat die induzierte Spannung keinen Einfluss, und es wird nur die Betriebsspannung gemessen. Je nach Drehzahl muss dieses Verfahren sehr schnell funktionieren, da die induzierte Spannung vor und nach dem Nulldurchgang eine starke Flankensteilheit hat. Diese könnte sonst zu Messfehlern führen.

Außer der fehlenden Information über die Rotorstellung gibt es noch weitere wichtige Faktoren, auf die bei einem sensorlosen Anlauf geachtet werden muss. Je nach Betriebsspannung, Wicklungsauslegung und Wicklungstemperatur ergeben sich verschiedene Wicklungswiderstände und dadurch verschiedene Wicklungsströme und verschiedene Anlauf-Drehmomente. Dem Anlaufmoment stehen Reibungsmomente gegenüber, welche sich mit Temperatur und Alter des Motors verändern. Weiterhin muss bei verschiedenen Rotoren das unterschiedliche axiale Trägheitsmoment beachtet werden. Auch ergeben sich je nach Drehrichtung unterschiedliche Winkelbeschleunigungen.

Wenn die durch den ersten Bestromungsblock erreichte Winkelbeschleunigung ausreicht, um die durch den Rotor induzierte Spannung auszuwerten, hat man die Möglichkeit, festzustellen, in welche Drehrichtung der Rotor beschleunigt wurde. Dazu ist es notwendig, dass der erste Bestromungsblock nicht zu lang gewählt wird, um nach dem Bestromen und nach dem anschließenden Stromkreisen auch noch die induzierte Spannung messen zu können.

Falls nach dem ersten Bestromungsblock (während des Zeitraums Ton der Fig. 3) keine induzierte Spannung gemessen werden kann, kann dies verschiedene Ursachen haben. Der Motor könnte durch einen externen Einfluss blockiert sein, oder der erste Bestromungsblock wurde zu kurz gewählt, und als Folge erhöhter Lagerreibung, von Alterung oder von einem hohen Wicklungswiderstand würde dann das erzeugte elektrische Drehmoment nicht ausreichen, um den Rotor genügend zu beschleunigen. In diesem Fall kann eine induzierte Spannung nicht festgestellt werden. Für alle diese verschiedenen Fälle muss Vorsorge getroffen werden.

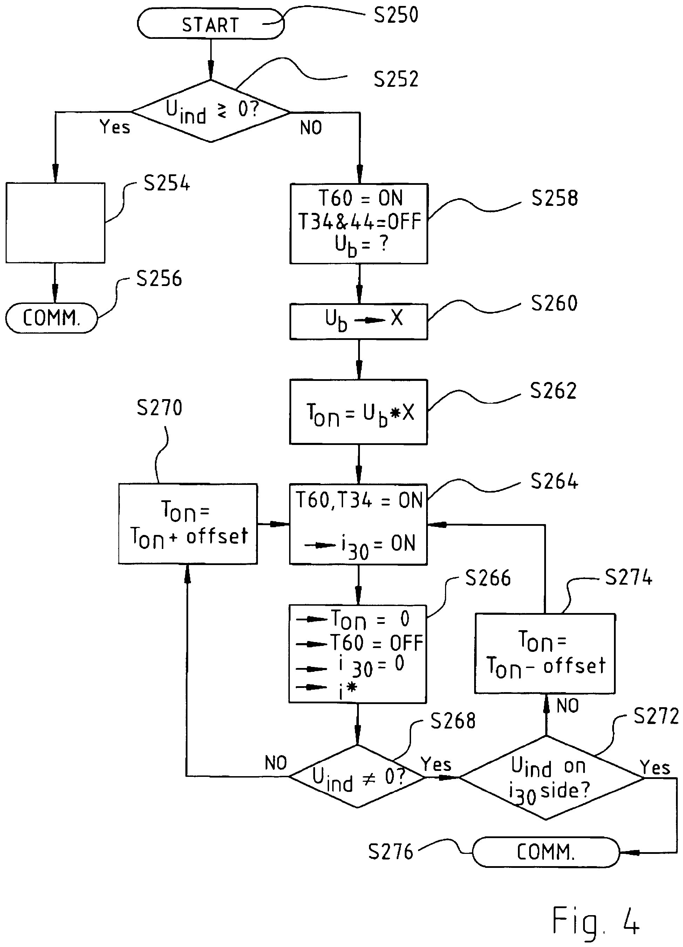

**Fig. 4** zeigt eine Startroutine für den Normalfall, bei dem der Rotor 22 in einer vorgegebenen Drehstellung stillsteht, aus der er gestartet werden soll.

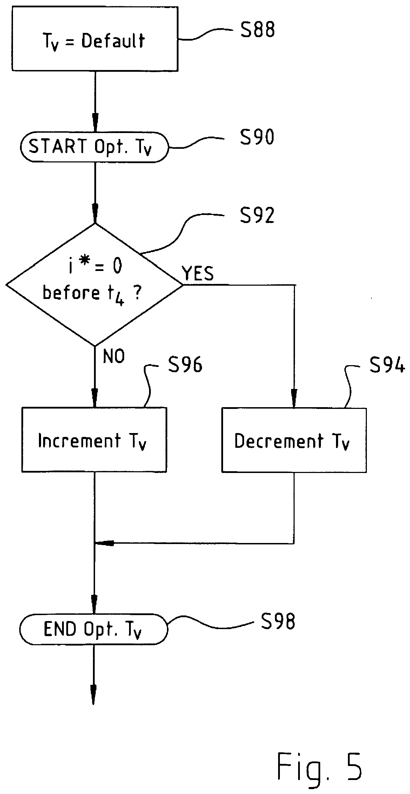

Der Start ist bei S250. Bei S252 wird geprüft, ob die induzierte Spannung $u_{ind}$ von Null verschieden ist, d. h. man prüft, ob sich der Rotor 22 dreht. Falls JA, geht das Programm zu einer speziellen Routine 254 für den Anlauf und geht anschließend bei S256 in eine normale Kommutierung in der gewünschten Drehrichtung über. Eine solche wird nachfolgend bei Fig. 5 beschrieben.

Falls bei S252 die Antwort NEIN lautet, geht das Programm zum Schritt S258, wo der Transistor 60 eingeschaltet und die Transistoren 34 und 44 ausgeschaltet werden, um am Eingang A/D des µC26 die Betriebsspannung Ub zu messen.

Im nächsten Schritt S260 wird aus Ub und ggf. anderen Faktoren, z. B. der augenblicklichen Temperatur, ein Faktor x abgeleitet, z. B. aus gespeicherten Tabellen, und in S262 wird mit diesem Faktor die Betriebsspannung Ub multipliziert, um die Zeitdauer $T_{on}$ des Einschalt-Stromimpulses zu berechnen, die voraussichtlich für den Anlauf des Motors 20 ausrechen wird.

Danach werden bei S264 die beiden Transistoren 60 und 34 eingeschaltet, wodurch der Strom $i_{30}$ durch den Strang 30 eingeschaltet und der Rotor 22 beschleunigt wird.

Nach Ablauf der im Schritt S262 berechneten Zeit $T_{on}$ wird im Schritt S266 der Transistor 60 abgeschaltet, wodurch die Energiezufuhr von der Stromquelle 63 unterbrochen wird. Da jedoch der Transistor 34 weiterhin leitend ist, fließt als Folge der im Wicklungsstrang 30 gespeicherten magnetischen Energie ein Kreisstrom i* vom Punkt 54 durch den Transistor 34, die Freilaufdiode 48, und die beiden Wicklungsstränge 32 und 30 zurück zum Punkt 54, und dieser Kreisstrom i* treibt den Rotor 22 an und fällt dadurch rasch auf Null.

Solange der Kreisstrom i* fließt, liegen die Drains D der beiden Transistoren 34 und 44 auf Massepotenzial, aber wenn i* gleich Null geworden ist, erhält man am Drain D des Transistors 34 eine induzierte Spannung uind, welche die Drehung des Rotors 22 anzeigt. Diese Spannung wird im Schritt S268 erfasst.

Wenn keine solche induzierte Spannung erfasst werden kann, geht das Programm zum Schritt S270, wo die Zeitspanne $T_{on}$ um einen Wert "Offset" vergrößert wird, und anschließend geht das Programm zum Schritt S264, um den Startversuch mit einer erhöhten Energie zu wiederholen.

Falls in S268 die Antwort JA ist, wird in S272 geprüft, ob die induzierte Spannung am Drain des Transistors 34 gemessen werden kann. Falls NEIN, ist die Zeitspanne $T_{on}$ zu groß, und sie wird deshalb in S274 um eine Korrekturzeit Offset verkürzt, um den Anlauf-Stromimpuls schwächer zu machen.

Anschließend geht das Programm zum Schritt S264, um den Anlaufvorgang mit reduzierter Energie zu wiederholen. Lautet dagegen bei S272 die Antwort JA, d. h. die induzierte Spannung tritt am Drain des Transistors 34 auf, so bedeutet dies, dass der Kreisstrom rechtzeitig auf Null gefallen ist, und das Programm geht zum Schritt S276, wo der ECM 20 normal kommutiert wird. In diesem Fall läuft der Motor 20 normal, und man erhält gewöhnlich einen problemlosen Start des Motors 20.

## Die Optimierung des Kommutierungszeitpunkts t4

Für einen optimalen und verlustarmen Lauf des Motors 20 ist eine optimierte Kommutierung wichtig, weil man dann einen ruhigen Lauf des Motors bei gutem Wirkungsgrad erhält.

Bei einem sensorlosen Motor ist die Optimierung der Kommutierung naturgemäß besonders schwierig, weil kein Rotorstellungssensor vorhanden ist, so dass man für die Optimierung mit anderen Größen arbeiten muss, die gemessen werden können.

Fig. 3 zeigt bei a) die Ströme i30, i32 in den beiden Strängen 30 und 32 des Motors 20. Bei b) ist das Potenzial p52 am Knotenpunkt 52 der Fig. 2 dargestellt, also am Drain D des FET 44. (Das Potenzial p54 am Knotenpunkt 54 hat - wegen der Symmetrie der Anordnung - denselben Verlauf, aber um 180 ° versetzt, und ist deshalb in Fig. 3 nicht dargestellt.)

Solange der FET 44 leitend ist, verbindet er seinen Drain D mit Masse 56, so dass am Punkt 52 keine Spannung gemessen werden kann, die vom permanentmagnetischen Rotor 22 im Strang 32 induziert wird.

Sobald aber der Strom i* auf Null gesunken ist, kann man am Knotenpunkt 52 diese induzierte Spannung messen, die in Fig. 3b) mit 68 bezeichnet ist, so dass das Auftreten der Spannung 68 bedeutet, dass der Kreisstrom i* auf Null gefallen ist, was zum Zeitpunkt t3 der Fall ist und bedeutet, dass ab jetzt leistungslos kommutiert werden kann.

Die Zeitspanne Tv, welche zwischen dem Zeitpunkt t2 liegt, an dem der FET 60 gesperrt und dadurch der Strom i30 abgeschaltet wird, und dem Zeitpunkt t4, an dem die FETs 44 und 60 eingeschaltet werden, so dass ein Strom i32 durch den Strang 32 fließt, hat also einen optimalen Wert, wenn die Zeitspanne Tp zwischen den Zeitpunkten t3 und t4 möglichst kurz wird, da dann auch Tv einen minimalen Wert hat.

Andererseits darf naturgemäß Tv nicht zu kurz werden, da dann das Einschalten des Stromes i32 (Zeitpunkt t4) in einen Zeitraum Ti (zwischen t2 und t3) fallen würde, in dem noch der Kreisstrom i* fließt, so dass eine leistungslose Kommutierung nicht möglich wäre. In diesem Fall muss also die Zeitspanne Tv verlängert werden.

Diesem Zweck dienen die Vorgänge, die in den Flussdiagrammen der Fig. 4 und 5 dargestellt sind.

Die Zeit Tv (Fig. 3), die beim Start des Motors 20 auf einen Default-Wert gesetzt wird, und an deren Beginn zum Zeitpunkt t2 jeweils das "Vorspiel" zur Kommutierung beginnt, kann durch den μC 26 optimiert werden. Die entsprechende Routine ist in Fig. 5 dargestellt.

Diese Routine beginnt im Schritt S88 und wird bevorzugt bei jeder Kommutierung aufgerufen. In S88 wird nach dem Einschalten Tv auf einen Default-Wert gesetzt. In S90 beginnt die Optimierung von Tv. In S92 wird geprüft, ob das Ende (t3) des Stromkreises vor dem Zeitpunkt t4 der Kommutierung erkannt wurde. Ist dies der Fall, so wird Tv in S94 um eine Schrittweite ΔTv1 reduziert. Ist dies nicht der Fall, so wird Tv in S96 um eine Schrittweite ΔTv2 erhöht, die größer ist als die Schrittweite ΔTv1 im Schritt S94. Die Optimierung endet im Schritt S98.

Auf diese Weise stellt sich innerhalb weniger Umdrehungen automatisch ein optimaler Wert für Tv auch dann ein, wenn sich die Motordrehzahl durch äußere Einflüsse geändert hat, z. B. durch eine Luftströmung.

### Probleme am übergeordneten Transistor 60

Beim Anlauf oder einem Lastwechsel des Motors 20 kann es vorkommen, dass der übergeordnete Transistor 60 zu spät gesperrt wird und deshalb im Kommutierungszeitpunkt noch ein Kreisstrom durch die Stränge 30, 32 fließt. In diesem Fall ist eine stromlose Kommutierung nicht möglich, und hiergegen müssen Schutzmaßnahmen ergriffen werden.

Eine dieser Möglichkeiten ist die Verwendung eines Zwischenkreiskondensators, der zwischen dem Zwischenkreis 58 und Masse 56 angeordnet ist, und der die restliche magnetische Energie des abzuschaltenden Wicklungsstranges aufnimmt und dadurch die Spannung am Zwischenkreis 58 begrenzt.

Ebenso kann zwischen dem Zwischenkreis 58 und Masse 56 eine Z-Diode eingeschaltet werden, um die Spannung am Zwischenkreis 58 zu begrenzen.

Ebenso können die Drainspannungen der FETs 34 und 44 durch Z-Dioden begrenzt werden, welche jeweils zwischen dem zugeordneten Drain D und Masse 56 angeordnet werden.

Eine andere, ggf. zusätzliche Möglichkeit ist die Begrenzung der Drainspannungen der FETs 34, 44 durch langsames Schalten. Dies kann erreicht werden durch Serienschaltung eines Kondensators und eines Widerstands, welche zwischen Drain D und Gate G des betreffenden FET geschaltet wird.

Auch können die Drainspannungen der FETs 34, 44 begrenzt werden durch langsames Schalten des betreffenden FET. Dies ist möglich durch Serienschaltung einer Z-Diode 124 und eine Widerstands 126. Eine solche Serienschaltung wird in diesem Fall beim betreffenden Transistor zwischen D und G geschaltet.

Zusätzlich kann für den Motor 20 eine Strombegrenzung vorgesehen werden. Dies ist in Fig. 2 nicht dargestellt, um die Darstellung nicht durch eine Vielzahl von Teilen schwer verständlich zu machen. Bevorzugt wird die Strombegrenzung in der Weise, dass der übergeordnete Transistor 60 bei einem Überstrom gesperrt wird, um die Energiezufuhr von der Gleichstromquelle 63 zum Motor 20 zu unterbrechen. Hierdurch ergibt sich jeweils ein Kreisstrom i*, wie bereits beschrieben, und dieser Kreisstrom erzeugt ein Drehmoment, so dass man eine Strombegrenzung mit hohem Wirkungsgrad erhält.

Naturgemäß sind im Rahmen der vorliegenden Erfindung vielfache Abwandlungen und Modifikationen möglich.

Die Halbleiterschalter 34, 44, 60 sind bevorzugt als Transistoren, weiter bevorzugt als Feldeffekttransistoren (FETs) ausgebildet.

**Patentansprüche**

1. Elektronisch kommutierter einphasiger Motor (20), welcher aufweist:

   einen Stator, welcher zwei Wicklungsstränge (30, 32) aufweist, von denen jeder über einen Knotenpunkt (54, 52) mit einem zugeordneten Halbleiterschalter (34, 44) in Reihe geschaltet ist,
   welchen beiden Serienschaltungen (40, 50) ein dritter Halbleiterschalter (60) vorgeschaltet ist, der bei seiner Sperrung die Stromzufuhr von einer Gleichstromquelle (63) zum Motor (20) unterbricht, und einen permanentmagnetischen Rotor (22), welch letzterer bei seiner Drehung in die Wicklungsstränge (30, 32) eine Spannung ($u_{ind}$) induziert;
   eine elektronische Recheneinrichtung (26), welche dazu ausgebildet ist, im Betrieb folgende Schritte zu bewirken, **gekennzeichnet durch**:

   a) die augenblickliche Betriebsspannung (Ub) des Motors wird in digitaler Form erfasst;
   b) mit Hilfe des erfassten Werts der Betriebsspannung (Ub) und ggf. weiterer Parameter wird eine zeitliche Dauer ($T_{on}$) eines Einschalt-Stromimpulses ($i_{30}$) für den Motor (20) ermittelt;
   c) ein vorgegebener Wicklungsstrang (30) des Motors wird mit diesem Stromimpuls ($i_{30}$) bestromt;
   d) nach Ablauf des Einschalt-Stromimpulses ($i_{30}$) wird die Energiezufuhr zum Motor durch Sperrung des dritten Halbleiterschalters (60) unterbrochen, so dass durch die im Motor (20) gespeicherte magnetische Energie kurzzeitig ein im Motor kreisender, durch die Wicklungsstränge (30, 32) fließender Strom (i*) erzeugt wird, der im Folgenden als Kreisstrom bezeichnet wird;
   e) es wird durch Auswertung des Potenzials an den Knotenpunkten (54, 52) überwacht, ob nach dem Ende des Kreisstroms (i*) eine induzierte Spannung auftritt;
   f) falls dies nicht der Fall ist, wird die zeitliche Dauer ($T_{on}$) des Einschalt-Stromimpulses ($i_{30}$) verlängert, und der Startvorgang wird mit dieser verlängerten zeitlichen Dauer wiederholt;
   g) falls nach dem Ende des Kreisstroms (i*) eine induzierte Spannung auftritt, wird geprüft, ob diese auf der Seite des vorgegebenen Wicklungsstranges (30) auftritt;
   h) falls NEIN, wird die zeitliche Dauer ($T_{on}$) des Einschalt-Stromimpulses ($i_{30}$) verkürzt, und der Startvorgang wird mit dieser verkürzten zeitlichen Dauer wiederholt;
   i) falls JA, erfolgt Übergang zu normaler Kommutierung des Motors (20).

2. Motor nach Anspruch 1, bei welchem mindestens einem Teil der Halbleiterschalter (34, 44, 60) eine Freilaufdiode (38, 48, 61) zugeordnet ist

3. Motor nach Anspruch 1 oder 2, bei welchem die Halbleiterschalter (34, 44, 60) als Feldeffekttransistoren ausgebildet sind.

4. Motor nach einem der vorhergehenden Ansprüche, bei welchem zum Steuern der Halbleiterschalter (34, 44, 60) ein Mikrocontroller (26) vorgesehen ist.

5. Motor nach Anspruch 4, bei welchem dem Mikrocontroller (26) Signale (p52, p54) von den den Wicklungen (30, 32) zugeordneten Halbleiterschaltungen (34, 44) zur Auswertung zuführbar sind.

6. Motor nach einem der vorhergehenden Ansprüche, bei welchem mindestens eines der zur Auswertung zuführbaren Signale einem im Mikrocontroller (26) vorgesehenen A/D-Wandler zwecks digitaler Erfassung der augenblicklichen Betriebsspannung (Ub) zuführbar ist.

7. Motor nach einem der vorhergehenden Ansprüche, bei welchem während der Zufuhr des zur Erfassung der Betriebsspannung (Ub) dienenden Signals die Bestromung des mindestens einen Wicklungsstranges (30, 32) unterbrochen ist.

8. Motor nach einem der vorhergehenden Ansprüche, bei welchem die elektronische Recheneinrichtung (26) dazu ausgebildet ist, den zeitlichen Abstand (Tp) zwischen dem Ende eines Kreisstroms (i*) und dem darauf folgenden Kommutierungszeitpunkt (t4) zu erfassen.

9. Motor nach Anspruch 8, bei welchem die elektronische Recheneinrichtung (26) dazu ausgebildet ist, bei Auftreten eines solchen zeitlichen Abstands (Tp) diesen schrittweise zu verkleinern.

10. Motor nach Anspruch 8 oder 9, bei welchem die elektronische Recheneinrichtung (26) dazu ausgebildet ist, beim Fehlen eines solchen zeitlichen Abstands (Tp) mindestens einen Kommutierungsparameter in einer Richtung zu verändern (S 96), bei welcher ein solcher zeitlicher Abstand (Tp) auftritt.

**Claims**

1. A single phase electronically commutated motor (20), having:

a stator, having two winding strands (30, 32), each connected in series with an associated semiconductor switch (34, 44) via a junction (54, 52),

the two series circuits (40, 50) being preceded by a third semiconductor switch (60) which interrupts the power supply from a DC power source (63) to the motor (20) when it is blocked, and a permanent-magnet rotor (22), the latter inducing a voltage ($u_{Ind}$) in the winding strands (30, 32) when rotated;

an electronic computing device (26) configured to effect the following steps during operation, **characterized by**:

a) the instantaneous operating voltage (Ub) of the motor is detected in digital form;

b) by means of the detected value of the operating voltage (Ub) and optionally further parameters, a time duration ($T_{on}$) of a turn-on current pulse ($i_{30}$) for the motor (20) is determined;

c) a predetermined winding strand (30) of the motor is energized with said current pulse ($i_{30}$);

d) at the end of the turn-on current pulse ($i_{30}$), the power supply to the motor is interrupted by blocking the third semiconductor switch (60) such that the magnetic energy stored in the motor (20) temporarily generates a current ($i^*$) circulating in the motor and flowing through the winding strands (30, 32), which is hereinafter referred to as a circular current;

e) by evaluating the potential at the junctions (54, 52), it is monitored whether an induced voltage occurs after the end of the circular current ($i^*$);

f) if this is not the case, the time duration ($T_{on}$) of the turn-on current pulse ($i_{30}$) is extended, and the starting process is repeated with this extended time duration;

g) if an induced voltage occurs after the end of the circular current ($i^*$), it is checked whether it occurs on the side of the predetermined winding strand (30);

h) if NO, the time duration ($T_{on}$) of the turn-on current pulse ($i_{30}$) is shortened, and the starting process is repeated with this shortened time duration;

i) if YES, there is a transition to normal commutation of the motor (20).

2. The motor according to claim 1, wherein at least a part of the semiconductor switches (34, 44, 60) is associated with a freewheeling diode (38, 48, 61).

3. The motor according to claim 1 or 2, wherein the semiconductor switches (34, 44, 60) are formed as field-effect transistors

4. The motor according to any one of the preceding claims, wherein a microcontroller (26) is provided for controlling the semiconductor switches (34, 44, 60).

5. The motor according to claim 4, wherein signals (p52, p54) from the semiconductor circuits (34, 44) associated with the windings (30, 32) are feedable to the microcontroller (26) for evaluation.

6. The motor according to any one of the preceding claims, wherein at least one of the signals feedable for evaluation are feedable to an A/D converter provided in the microcontroller (26) for the purpose of digital detection of the instantaneous operating voltage (Ub).

7. The motor according to any one of the preceding claims, wherein, while feeding the signal used for detecting the operating voltage (Ub), the energization of the at least one winding strand (30, 32) is interrupted.

8. The motor according to any one of the preceding claims, wherein the electronic computing device (26) is configured to detect the time interval (Tp) between the end of a circular current ($i^*$) and the subsequent commutation time (t4).

9. The motor according to claim 8, wherein the electronic computing device (26) is configured, upon occurrence of such a time interval (Tp), to reduce the same in a stepwise manner.

10. The motor according to claim 8 or 9, wherein the electronic computing device (26) is configured, in the absence of such a time interval (Tp), to change at least one commutation parameter in one direction (S96) in which such a time interval (Tp) occurs.

**Revendications**

1. Moteur monophasé à commutation électronique (20), lequel présente :

un stator, lequel présente deux fils d'enroulement (30, 32), dont chacun est branché en série par l'intermédiaire d'un point nodal (54, 52) à un commutateur à semi-conducteur (34, 44) associé,

avec deux commutateurs à semi-conducteur (40, 50) en amont desquels est branché un troisième commutateur à semi-conducteur (60) qui interrompt lors de sa fermeture l'amenée de courant depuis une source de courant continu (63) vers le moteur (20), et un
rotor à aimants permanents (22), lequel induit, lors de sa rotation, dans les fils d'enroulement (30, 32) une tension ($u_{Ind}$) ;
un système de calcul électronique (26), lequel est réalisé pour entraîner lors du fonctionnement les étapes qui suivent, **caractérisé par** :

a) la détection sous une forme numérique de la tension de fonctionnement (Ub) instantanée du moteur ;

b) la détermination, à l'aide de la valeur détectée de la tension de fonctionnement (Ub) et éventuellement d'autres paramètres, d'une durée dans le temps ($T_{on}$) d'une impulsion de courant d'activation ($i_{30}$) pour le moteur (20) ;

c) l'alimentation en courant d'un fil d'enroulement (30) prédéfini du moteur avec ladite impulsion de courant ($i_{30}$) ;

d) l'interruption, à l'issue de l'impulsion de courant d'activation ($i_{30}$), de l'apport d'énergie au moteur par la fermeture du troisième commutateur à semi-conducteur (60) de sorte qu'un courant ($i^*$) circulant dans le moteur, s'écoulant à travers les fils d'enroulement (30, 32), qui est désigné ci-après par courant circulaire, est généré brièvement par l'énergie magnétique stockée dans le moteur (20) ;

e) la surveillance par l'évaluation du potentiel au niveau des points nodaux (54, 52) pour savoir si une tension induite apparaît à la fin du courant circulaire ($i^*$) ;

f) si cela n'est pas le cas, le prolongement de la durée dans le temps (Ton) de l'impulsion de courant d'activation ($i_{30}$) et la répétition de l'opération de démarrage avec ladite durée dans le temps prolongée ;

g) en cas d'apparition d'une tension induite à la fin du courant circulaire ($i^*$), le contrôle pour savoir si celle-ci apparaît sur le côté du fil d'enroulement (30) prédéfini ;

h) dans la NÉGATIVE, le raccourcissement de la durée dans le temps (Ton) de l'impulsion de courant d'activation ($i_{30}$), et la répétition de l'opération de démarrage avec ladite durée dans le temps raccourcie ;

i) dans l'AFFIRMATIVE, le passage à une commutation normale du moteur (20).

2. Moteur selon la revendication 1, où une diode de roue libre (38, 48, 61) est associée à au moins une partie des commutateurs à semi-conducteur (34, 44, 60).

3. Moteur selon la revendication 1 ou 2, où les commutateurs à semi-conducteur (34, 44, 60) sont réalisés en tant que transistors à effet de champ.

4. Moteur selon l'une quelconque des revendications précédentes, où un microcontrôleur (26) est prévu pour commander les commutateurs à semi-conducteur (34, 44, 60).

5. Moteur selon la revendication 4, où des signaux (p52, p54) de commutateurs à semi-conducteur (34, 44) associés aux enroulements (30, 32) peuvent être amenés aux fins de l'évaluation au microcontrôleur (26).

6. Moteur selon l'une quelconque des revendications précédentes, où au moins un des signaux pouvant être amenés aux fins de l'évaluation peut être amené à un convertisseur A/N prévu dans le microcontrôleur (26) aux fins d'une détection numérique de la tension de fonctionnement (Ub) instantanée.

7. Moteur selon l'une quelconque des revendications précédentes, où l'alimentation en courant de l'au moins un fil d'enroulement (30, 32) est interrompue pendant l'amenée du signal servant à la détection de la tension de fonctionnement (Ub).

8. Moteur selon l'une quelconque des revendications précédentes, où le système de calcul (26) électronique est réalisé pour détecter l'intervalle de temps (Tp) entre la fin d'un courant circulaire ($i^*$) et le moment de commutation (t4) qui suit.

9. Moteur selon la revendication 8, où le système de calcul électronique (26) est réalisé pour réduire progressivement celui-ci lors de l'apparition d'un intervalle de temps (Tp) de ce type.

10. Moteur selon la revendication 8 ou 9, où le système de calcul électronique (26) est réalisé pour modifier (S96), en l'absence d'un intervalle de temps (Tp) de ce type, au moins un paramètre de commutation dans un sens, dans lequel un intervalle de temps (Tp) de ce type apparaît.

Fig. 1

Fig. 2

EP 2 343 797 B1

Fig. 3

Fig. 4

Fig. 5

EP 2 343 797 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008148401 A1
- WO 2007140927 A1